# EUROPEAN PATENT APPLICATION

(11) **EP 4 696 565 A1**
(43) Date of publication of application: **18.02.2026**
(21) Application number: 25194044.1
(22) Date of filing: 05.08.2025
(51) Int. Cl.: B60T 7/04, B60T 7/08, B60T 7/12, B60T 7/14

(54) **COMPUTER SYSTEM FOR TEMPORARILY DISABLING AN AUTOMATIC APPLICATION OF A PARKING BRAKE OF A VEHICLE, VEHICLE COMPRISING SUCH A COMPUTER SYSTEM, METHOD, COMPUTER PROGRAM PRODUCT AND NON-TRANSITORY COMPUTER-READABLE STORAGE MEDIUM**

(30) Priority: 13.08.2024 US 202418802620
(71) Applicant: VOLVO TRUCK CORPORATION, 405 08 Göteborg (SE)
(72) Inventor: MONNIER, Martin, 69007 LYON (FR); FARRES, Lionel, 38540 HEYRIEUX (FR); NEWTON, Robert, GREENSBORO (US)
(74) Representative: Lavoix

(57) **Abstract**

A computer system for temporarily disabling an automatic application of a parking brake of a vehicle, comprising processing circuitry configured to:
- apply automatically the parking brake of the vehicle;
- upon a command of a driver of the vehicle, temporarily disable the automatic application of the parking brake;
the processing circuit being further configured to receive data from a door sensor and a speed sensor, and to end the disabling of the automatic application of the parking brake if the processing circuit determines that one of the following conditions is met:
- a door of the vehicle is closed;
- the vehicle has a speed greater than a first speed threshold, and a gear of the vehicle is engaged; or
a time period greater than a predefined time period has elapsed, the time period starting when the processing circuitry determines that the driver is inactive.

## Description

### TECHNICAL FIELD

The disclosure relates generally to vehicles. In particular aspects, the disclosure relates to a computer system to temporarily disable the automatic application of a parking brake of a vehicle, a vehicle comprising such a computer system, a method, a computer program product and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In vehicles with an electronic parking brake, it is well-known to introduce active safety features, such as an automatic application of the parking brake. The automatic application of the parking brake is generally implemented when processing circuitry comprised in the vehicle determines that the driver is inactive, in other words, that the driver is not driving the vehicle. However, the automatic application of the parking brake needs to be sometimes disabled, in order to improve driving conditions for drivers.

### SUMMARY

It is therefore an object of the invention to allow the parking brake to be disabled without compromising the safety of the driver, or of people or objects in the vicinity of the vehicle.

According to a first aspect of the disclosure, the invention relates to a computer system, for temporarily disabling an automatic application of a parking brake of a vehicle, the computer system comprising processing circuitry configured to:
- apply automatically the parking brake of the vehicle;
- upon a command of a driver of the vehicle, temporarily disable the automatic application of the parking brake;
   the processing circuit being further configured to receive data from a door sensor and a speed sensor, and to end the disabling of the automatic application of the parking brake if the processing circuit determines, based on the data from the door sensor and the speed sensor, that one of the following conditions is met:
- a door of the vehicle is closed;
- the vehicle has a speed greater than a first speed threshold, and a gear of the vehicle is engaged; or
- a time period greater than a predefined time period has elapsed, the time period starting when the processing circuitry determines that the driver is inactive.

The first aspect of the disclosure may allow the parking brake to be disabled, thus facilitating the driving of the vehicle, for example during maneuvers, without compromising the safety of the driver or of people or objects near the vehicle. A technical benefit may include allowing the parking brake to be disabled only for the necessary amount of time. If one of the conditions is met, it means that the driver does not need the automatic application of the parking brake to be disabled, and therefore, the disabling of the automatic application of the parking brake ends, to ensure the safety of the driver of the vehicle, or of people or objects near the vehicle.

Optionally in some examples, including in at least one preferred example, if during the time period, the processing circuitry determines that the driver is active, the time period is reset and starts again when the processing circuitry determines that the driver is inactive again. A technical benefit may include adjusting the disabling period of the automatic application of the parking brake to prevent an untimely ending of the disabling of the automatic application of the parking brake, without compromising safety. Indeed, as long as the driver is active, in other words actively driving the vehicle, there is no need to end the disabling of the automatic application of the parking brake, since the driver is driving the vehicle and can intervene to stop the vehicle if necessary.

Optionally in some examples, including in at least one preferred example, the processing circuit is further configured to end the disabling of the automatic application of the parking brake if the door of the vehicle is closed and if the processing circuitry determines that the driver is inactive. A technical benefit may include preventing the untimely ending of the disabling of the automatic parking brake without compromising safety, by distinguishing between a door which is closed but with a driver still active, in other words still driving the vehicle, in which case it may be desired to maintain the automatic application of the parking brake disabled, and a door which is closed with an inactive driver, in which case the automatic application of the parking brake may be preferred.

Optionally in some examples, including in at least one preferred example, the processing circuitry is further configured to determine that the driver is inactive when a seatbelt of a driver seat is unfastened. A technical benefit may include determining if the driver is active or inactive in a simple manner.

Optionally in some examples, including in at least one preferred example, the processing circuitry is configured to determine that the driver is inactive when no pressure is applied to pedals of the vehicle, based on data received from a pedal pressure sensor. A technical benefit may include determining if the driver is active or inactive in a reliable manner, since applying no pressure to the pedals is a reliable indication of the driver not currently driving the vehicle, and therefore being inactive.

Optionally in some examples, including in at least one preferred example, the processing circuitry is configured to determine that the driver is inactive when all the gears the vehicle are disengaged. A technical benefit may include determining if the driver is active or inactive in a reliable manner, since having no gear engaged is a reliable indication of the driver not currently driving the vehicle, and therefore being inactive.

According to a second aspect of the disclosure, the invention relates to a vehicle comprising the computer system previously described, and wherein the vehicle further comprises:
- a parking brake, configured to be applied to prevent movement of the vehicle, and released, to allow the vehicle to move;
- a door, configured to be open or closed to allow the driver to enter and exit the vehicle;
- a door sensor, configured to determine whether the door is open or closed, and to send data representative of whether the door is open or closed to the computer system; and
- a speed sensor, configured to measure a speed of the vehicle and to send the measured speed to the computer system.

The second aspect of the disclosure may seek to propose a vehicle, in which it is possible for the parking brake to be disabled, thus facilitating the driving of the vehicle, for example during maneuvers, without compromising the safety of the driver or of people or objects near the vehicle. A technical benefit may include allowing the parking brake to be disabled only for the necessary amount of time.

Optionally in some examples, including in at least one preferred example, the vehicle further comprises at least one pedal pressure sensor, configured to measure whether or not pressure is applied to the pedals to operate the pedals, and to send data representative of whether pressure is applied to the pedals or not to the computer system. A technical benefit may include determining if the driver is active or inactive in a reliable manner, since applying no pressure to the pedals is a reliable indication of the driver not currently driving the vehicle, and therefore being inactive.

Optionally in some examples, including in at least one preferred example, the vehicle is a truck, the truck comprises a cabin, the door is a door of the cabin and the pedals are located in the cabin in order for the driver to operate the truck. A technical benefit may include implementing the computer system in a truck, where the need to temporarily disable the automatic application of the parking brake is greater as maneuvers that require disabling the automatic application of the parking brake are more frequent.

According to a third aspect of the disclosure, the invention relates to a method for temporarily disabling an automatic application of a parking brake in a vehicle, the method being implemented by processing circuitry of the vehicle, the method comprising the following steps:
- upon a command of a driver of the vehicle, temporarily disabling the automatic application of the parking brake;
- receiving data from a door sensor and a speed sensor;
- ending the disabling of the automatic application of the parking brake, if the processing circuitry determines, based on the data from the speed sensor and the door sensor, that one of the following conditions is met:
   ∘ a door of the vehicle is closed;
   ∘ the vehicle has a speed greater than a first speed threshold, and a gear of the vehicle is engaged; or
a time period greater than a predefined time period has elapsed, the time period starting when the processing circuitry determines that the driver is inactive.

The third aspect of the disclosure may seek to propose a method to facilitate the driving of the vehicle, for example during maneuvers, without compromising the safety of the driver or of people near the vehicle. A technical benefit may include allowing the parking brake to be disabled only for the necessary amount of time. If one of the conditions is met, it means that the driver does not need the automatic application of the parking brake to be disabled, and therefore, the disabling of the automatic application of the parking brake ends, to ensure the safety of the driver of the vehicle, or of people or objects near the vehicle.

Optionally in some examples, including in at least one preferred example, the command of the driver to temporarily disable the automatic application of the parking brake consists in, while the parking brake is applied, releasing the parking brake by the driver. A technical benefit may include having a command to temporarily disable the automatic application of the parking brake, which is simple to perform by the driver.

Optionally in some examples, including in at least one preferred example, releasing the parking brake by the driver consists in pushing a parking brake lever in a releasing direction, while pressing on a pedal of the vehicle. A technical benefit may include having a command to temporarily disable the automatic application of the parking brake that is simple to perform by the driver.

Optionally in some examples, including in at least one preferred example, the command of the driver to temporarily disable the automatic application of the parking brake consists in, while the parking brake is applied, opening a door of the vehicle and releasing the parking brake by the driver. A technical benefit may include having a command to temporarily disable the automatic application of the parking brake, which is simple to perform without risking untimely disabling of the automatic parking brake.

Optionally in some examples, including in at least one preferred example, the command of the driver of the vehicle is a first command, and temporary disabling of the automatic application of the parking brake is done according to a first disabling mode, and the method comprises the following additional steps:
- upon a second command of the driver of the vehicle, temporarily disabling the automatic application of the parking brake according to a second disabling mode,
- in the second disabling mode, receiving data from the speed sensor;
- ending the disabling of the automatic application of the parking brake, if one of the following conditions is met:
   ∘ the parking brake is applied by the driver; or
the vehicle has a speed greater than a second speed threshold.

A technical benefit may include being able to disable the automatic application of the parking brake in different situations, such as a first situation where the driver maneuvers the vehicle with an open door, and a second situation where the vehicle is in maintenance, and disabling the automatic application of the parking brake for a long period of time improves the safety of workers working on the vehicle.

According to a fourth aspect of the disclosure, the invention relates to a computer program product comprising program code for performing, when executed by the processing circuitry, the method previously described. The fourth aspect of the disclosure may seek to propose a method to facilitate the driving of the vehicle, for example during maneuvers, without compromising the safety of the driver or of people or objects near the vehicle. A technical benefit may include implementing the method in computer program product that can be used in any vehicle.

According to a fifth aspect of the disclosure, the invention relates to a non-transitory computer-readable storage medium comprising instructions, which when executed by the processing circuitry, cause the processing circuitry to perform the method previously described. The fifth aspect of the disclosure may seek to may seek to propose a method to facilitate the driving of the vehicle, for example during maneuvers, without compromising the safety of the driver or of people near the vehicle. A technical benefit may include implementing the method in a storage medium that can be read by any processing circuitry, and can therefore be used in different vehicles.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a schematic diagram of an exemplary computer system for implementing examples disclosed herein, according to an example.
**FIG. 3** is a flow chart of a method for temporarily disabling an automatic application of a parking brake in a vehicle, wherein the automatic application of the parking brake is done according to a first disabling mode
**FIG. 4** is a flow chart of a method for temporarily disabling an automatic application of a parking brake in a vehicle, wherein the automatic application of the parking brake is done according to a second disabling mode.

### DETAILED DESCRIPTION

The detailed description set forth below provides information and examples of the disclosed technology with sufficient detail to enable those skilled in the art to practice the disclosure.

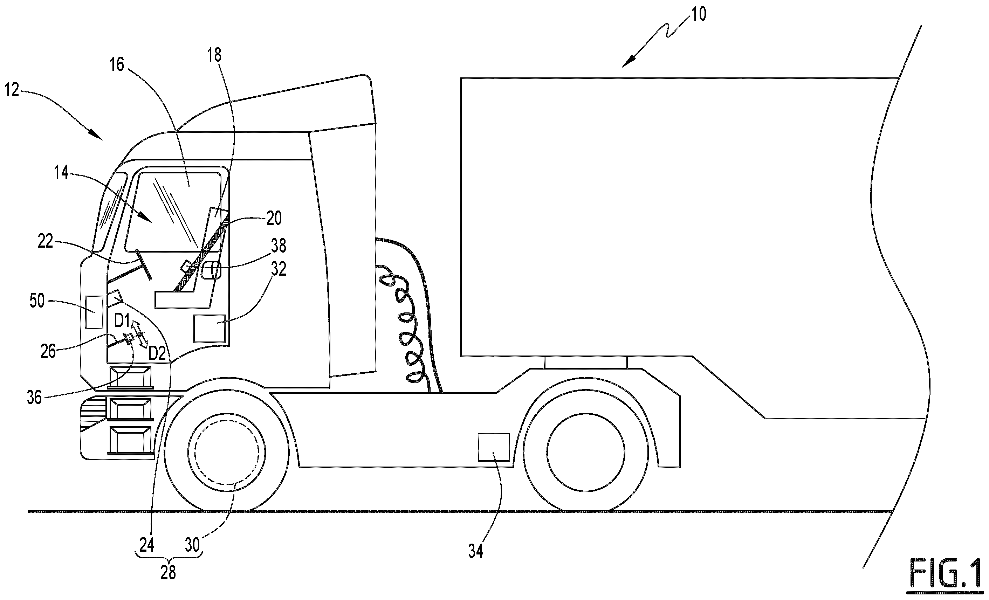

Figure 1 represents an exemplary vehicle 10. In the example of figure 1, the vehicle 10 is a truck, more precisely, a semi-trailer truck. The disclosure is not limited to this type of truck, and may be applied to other commercial vehicles such as heavy-duty vehicles, construction vehicles, specialized trucks such as garbage or fire trucks, etc.

The truck 10 comprises a cabin 12, which comprises an interior 14 and a cabin door 16, also simply called door. The door 16 is movable between a closed position and an open position, in other words that can be opened and closed, to allow a driver of the truck 10 to enter and exit the truck 10. The interior 14 is accessible from an outside of the cabin 12 through the door 16. Figure 1 shows the door 16 as transparent, in its closed position.

In some examples, the truck 10 comprises an additional door, not represented, on an opposite side of the cabin 12 relative to the door 16. The additional door is, for example, used by passengers to access the interior 14 of the cabin 12 from the outside.

The cabin 12 also comprises a driver seat 18, on which a driver sits when driving the truck 10, and a seatbelt 20 of the driver seat 18.

The cabin 12 comprises a steering wheel 22, a parking brake lever 24 and pedals 26, so that the driver of the truck 10 is able to drive the truck 10 from inside the cabin 12.

The parking brake lever 24 is part of an electronic parking brake system 28, included in the truck 10. The parking brake lever 24 is, in some examples, movable in a releasing direction D1, and in an application direction D2, which are, for example, opposite to each other. In some examples, to move the parking brake lever 24 in the releasing direction D1, the driver pushes on the parking brake lever 24, and to move the parking brake lever in the application direction D2, the driver pulls on the parking brake lever 24.

The truck 10 also includes a parking brake 30, included in the electronic parking brake system 28. The parking brake 30 is configured to be released, to allow the truck 10 to move, and to be applied, to prevent movement of the truck 10.

In particular, when the driver moves the parking brake lever 24 in the releasing direction D1, the parking brake 30 is released, and when the driver moves the parking brake lever 24 in the application direction D2, the parking brake 30 is applied.

The pedals 26 are for example an acceleration pedal and a brake pedal. In figure 1, only one pedal 26 is represented, for example the brake pedal.

In preferred embodiments, to release the parking brake 30, the driver moves the parking brake lever 24 in the releasing direction D1 while pressing on the pedal 26 with his foot, and to apply the parking brake 30, the driver moves the parking brake lever 24 in the application direction D2 while pressing on the pedal 26 with his foot.

The truck 10 further comprises a door sensor 32, which is located on the door 16, and a speed sensor 34, located on the truck 10.

In the example of figure 1, the truck 10 further comprises a pedal pressure sensor 36, and a seatbelt sensor 38.

The pedal pressure sensor 36 is configured to measure whether or not pressure is applied to the pedal 26 to operate the pedal 26, therefore measuring if the driver is pressing on the pedal 26.

In some examples, especially when the truck 10 comprises more than one pedal, the truck 10 may comprise a pedal pressure sensor for each pedal 26.

The truck 10 further comprises a computer system 50, which is connected to the parking brake lever 24, and to the sensors 32, 34, 36 and 38 by non-represented wires or wireless connections.

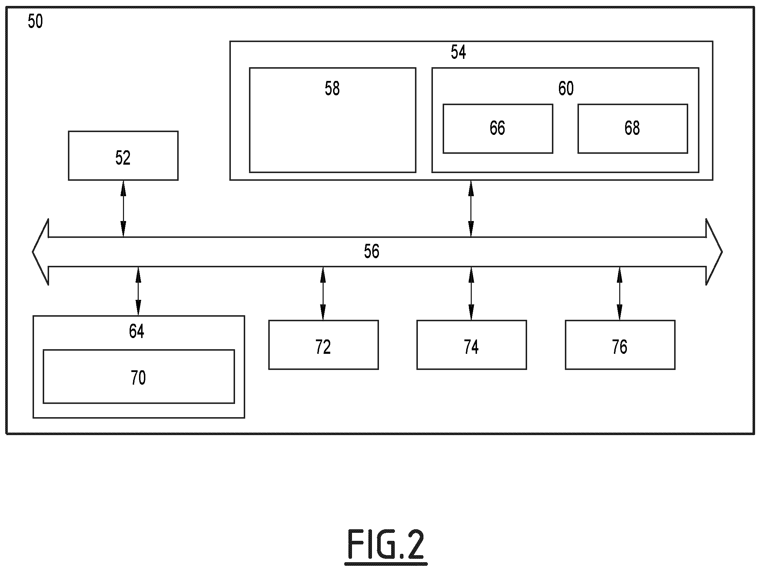

Figure 2 is a schematic diagram of the computer system 50 for implementing examples disclosed herein. The computer system 50 is adapted to execute instructions from a computer-readable medium to perform these and/or any of the functions or processing described herein. The computer system 50 may be connected, for example, networked to other machines in a LAN, or Local Area Network, LIN, or Local Interconnect Network, automotive network communication protocol such as FlexRay, an intranet, an extranet, or the Internet.

While only a single device is illustrated, the computer system 50 may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit, or ECU, processor device, processing circuitry, etc., includes reference to one or more such devices to individually or jointly execute a set or multiple sets of instructions to perform any one or more of the methodologies discussed herein. For example, a control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network or CAN bus, etc.

The computer system 50 may comprise at least one computing device or electronic device capable of including firmware, hardware, and/or executing software instructions to implement the functionality described herein. The computer system 50 may include processing circuitry 52 such as processing circuitry including one or more processor devices or control units, a memory 54, and a system bus 56. The computer system 50 may include at least one computing device having the processing circuitry 52. The system bus 56 provides an interface for system components including, but not limited to, the memory 54 and the processing circuitry 52. The processing circuitry 52 may include any number of hardware components for conducting data or signal processing or for executing computer code stored in memory 54. The processing circuitry 52 may, for example, include a general-purpose processor, an application specific processor, a Digital Signal Processor or DSP, an Application Specific Integrated Circuit or ASIC, a Field Programmable Gate Array or FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 52 may further include computer executable code that controls operation of the programmable device.

The system bus 56 may be any of several types of bus structures that may further interconnect to a memory bus with or without a memory controller, a peripheral bus, and/or a local bus using any of a variety of bus architectures. The memory 54 may be one or more devices for storing data and/or computer code for completing or facilitating methods described herein. The memory 54 may include database components, object code components, script components, or other types of information structure for supporting the various activities herein. Any distributed or local memory device may be utilized with the systems and methods of this description. The memory 54 may be communicably connected to the processing circuitry 52 for example via a circuit or any other wired, wireless, or network connection and may include computer code for executing one or more processes described herein. The memory 54 may include non-volatile memory 58, volatile memory 60 or any other medium which can be used to carry or store desired program code in the form of machine-executable instructions or data structures and which can be accessed by a computer or other machine with processing circuitry 52.

The computer system 50 may further include or be coupled to a non-transitory computer-readable storage medium such as a storage device 64, which may comprise, for example, an internal or external hard disk drive or HDD for storage, flash memory, or the like. The storage device 64 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 64 and/or in the volatile memory 60, which may include an operating system 66 and/or one or more program modules 68. All or a portion of the examples disclosed herein may be implemented as a computer program 70 stored on a transitory or non-transitory computer-usable or computer-readable storage medium, for example single medium or multiple media, such as the storage device 64, which includes complex programming instructions such as complex computer-readable program code to cause the processing circuitry 52 to carry out actions described herein. Thus, the computer-readable program code of the computer program 70 can comprise software instructions for implementing the functionality of the examples described herein when executed by the processing circuitry 52. In some examples, the storage device 64 may be a computer program product such as a readable storage medium storing the computer program 70 thereon, where at least a portion of a computer program 70 may be loadable into a processor, for example for implementing the functionality of the examples described herein when executed by the processing circuitry 52. The processing circuitry 52 may serve as a controller or control system for the computer system 50 that is to implement the functionality described herein.

The computer system 50 may include an input device interface 72 configured to receive input and selections to be communicated to the computer system 50 when executing instructions, such as from a keyboard, mouse, touch-sensitive surface, etc, or from sensors, such as the door sensor 32, the speed sensor 34, the pedal pressure sensor 36 and the seatbelt sensor 38. The input devices and sensors 32, 34, 36 and 38 may be connected to the processing circuitry 52 through the input device interface 72 coupled to the system bus 56. In variant, the input devices and sensors 32, 34, 36 and 38 are connected through other interfaces, such as a parallel port, an Institute of Electrical and Electronic Engineers (IEEE) 1394 serial port, a Universal Serial Bus (USB) port, an IR interface, and the like. The computer system 50 may include an output device interface 74 configured to forward output, such as to a display, for example a video display unit. The computer system 50 may include a communications interface 76 suitable for communicating with a network as appropriate or desired.

The processing circuitry 52 of the computer system 50 is configured to apply automatically the parking brake 30 of the truck 10. In particular, the automatic application of the parking brake 30 is performed in specific situations, for example if the driver leaves the cabin 12 without applying the parking brake 30.

A method for temporarily disabling an automatic application of the parking brake in the truck 10 is now described. The method is implemented by the processing circuitry 52.

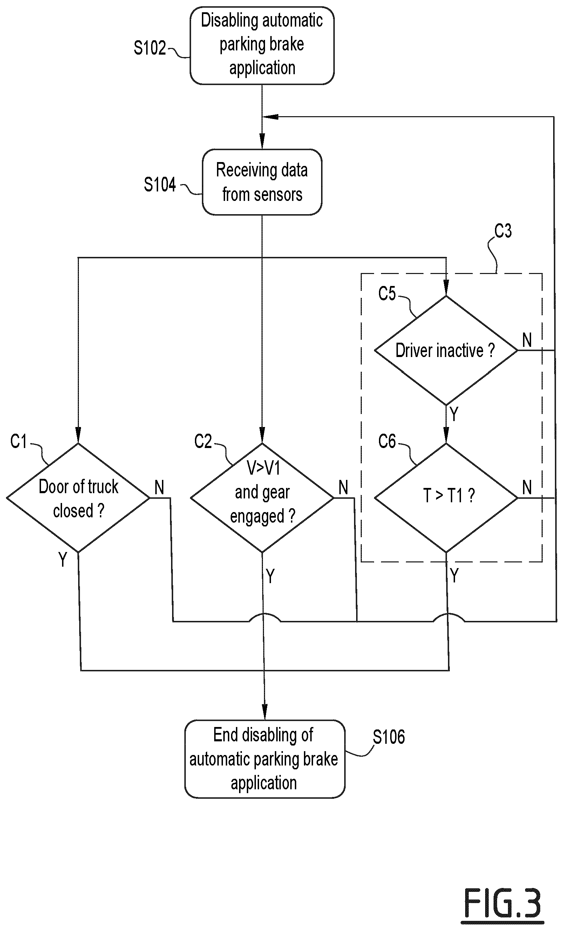

The processing circuitry 52 temporarily disables the automatic application of the parking brake 30 according to a first mode during a disabling step S102, represented on figure 3. The first mode is advantageously used by the drivers when performing low speed maneuvers in conditions that would prompt an automatic application of the parking brake 30 if it was not disabled, such as driving with the seatbelt 20 unfastened or with the door 16 open. Driving with the seatbelt 20 unfastened or with the door 16 open makes the maneuver easier for the driver, for example if he or she has a limited field of view, and needs to check his or her surroundings by looking outside instead of relying on rearview mirrors for example.

The disabling step S102 is performed upon a first command of the driver. For example, the driver may perform a series of actions to temporarily disable the automatic application of the parking brake 30 according to the first mode.

In some examples, the series of actions may be, while the parking brake 30 is applied, releasing the parking brake 30 by the driver, which is also called manually releasing the parking brake 30. In other words, the automatic application of the parking brake 30 may be temporarily disabled every time the driver releases the parking brake 30 himself.

In some examples, the series of actions to temporarily disable the automatic application of the parking brake 30 according to the first disabling mode consists in, while the parking brake 30 is applied, opening the door 16 of the truck 10, and releasing the parking brake 30 by the driver.

In some non-represented examples, the series of actions to temporarily disable the automatic application of the parking brake 30 according to the first disabling mode consists in, while the parking brake 30 is applied, opening the additional door, or both the door 16 and the additional door of the truck 10, and releasing the parking brake 30 by the driver.

The parking brake 30 may have been previously applied by the driver himself, or automatically.

Releasing the parking brake 30 by the driver is, for example, done by pushing the parking brake lever 24 in the releasing direction D1 while simultaneously pressing on the pedal 26.

In some examples, when the disabling step S102 is performed, a message is displayed for the driver on a display located in the truck cabin interior 14 to inform the driver that the automatic application of the parking brake 30 is temporarily disabled.

The processing circuitry 52 receives data from the door sensor 32 and the speed sensor 34 at a receiving step S104. For example, the door sensor 32 continuously measures whether the door 16 is open or not, and the speed sensor 34 continuously measures the speed, or velocity V of the truck 10. The door sensor 32 and the speed sensor 34 then respectively send data representative of whether the door 16 is open or closed and of the measured speed V to the computer system 50, more precisely to the processing circuitry 52 through the input device interface 72 coupled to the system bus 56.

In some examples, the processing circuitry 52 further receives data from the pedal pressure sensor 36 and/or from the seatbelt sensor 38. In particular, the pedal pressure sensor 36 measures whether or not pressure is applied to the pedal 26 to operate the pedal 26 and sends data representative of whether pressure is applied to the pedal 26 or not to the computer system 50, more precisely to the processing circuitry 52. Similarly, the seatbelt sensor 38 measures if the seatbelt 20 of the driver seat 18 is fastened or not and sends data representative of whether the seatbelt is fastened or not to the processing circuitry 52.

The processing circuitry 52 then determines if one of the following conditions C1, C2 or C3 is met, based on the data received from the door sensor 32 and speed sensor 34, and in some example, further based on data received from the pedal pressure sensor 36 and the seatbelt sensor 38.

The condition C1 is: the door 16 of the truck 10 is closed.

The condition C2 is: the truck 10 has a speed V greater than a first speed threshold V1 and a gear of the truck 10 is engaged. The first speed threshold V1 is for example comprises between 5 and 20km/h, for example equal to 10 km/h.

The condition C3 comprises two sub-conditions C5 and C6. Sub-condition C5 is: the processing circuit 52 determines that the driver is inactive. If that is the case, then the processing circuitry 52 starts measuring a time period T elapsed since the driver has been determined inactive. Sub-condition C6 is: the time period T is greater than a predefined time period T1. If the time period T is greater than the predefined time period T1, then the sub-condition C6 is met. In other words, the condition C3 is: a time T greater than a predefined time period T1 has elapsed, the time period starting when the processing circuitry 52 determines that the driver is inactive. The predefined time period T1 is comprised, for example, between 10 and 20 seconds, preferably equal to 15 seconds. By inactive, it is meant that the driver is not actively driving the truck 10.

In some examples, the processing circuitry 52 determines that the driver is inactive when no pressure is applied to the pedal 26 of the vehicle, based on data received from the pedal pressure sensor 36.

In some examples, the processing circuitry 52 determines that the driver is inactive when all the gears of the truck 10 are disengaged.

In some examples, the processing circuitry 52 determines that the driver is inactive when the seatbelt 20 is unfastened, based on data received from the seatbelt sensor 38.

If the driver becomes active again before the time period T has become greater than the predefined time period T1, then the time period T is reset, in particular to zero, and starts again when the processing circuitry 52 determines that the driver is inactive again.

If both sub-conditions C5 and C6 are met, then condition C3 is determined to be met. If one of the sub-conditions C5 and C6 is not met, then condition C3 is not met.

If any one of the conditions C1, C2 and C3 are met, then the processing circuitry 52 ends the disabling of the automatic application of the parking brake 30 during a step S106. If none of the conditions C1, C2 or C3 are met, then the temporary disabling of the automatic parking brake 30 is maintained by the processing circuitry 52.

Condition C1 ensures that if the driver exits the truck 10 and closes the door 16, the automatic application of the parking brake 30 is active, to apply automatically the parking brake 30 if necessary. Condition C2 ensures that if the truck 10 is being driven in conditions that do not correspond to a maneuver, which is done at speeds lower that the first speed threshold V1, then the temporary disabling of the parking brake 30 ends, as it is not necessary anymore. Condition C3 ensures that the driver is in control of the truck 10 by checking that he or she is actively driving the truck 10.

In some examples, condition C1 is: the door 16 of the truck 10 is closed and the processing circuitry 52 determines that the driver is inactive. This enables to differentiate between the driver closing the door 16 while still actively driving the truck 10, for example still maneuvering with the door 16 closed, where it may be advantageous to maintain the automatic application of the parking brake 30 disabled, and the driver closing the door 16, for example after exiting the truck 10, where the automatic application of the park brake 30 may be advantageous to improve safety.

In some examples, a message is displayed on the display in the truck 10 to inform the driver that the processing circuitry 52 has determined that he or she is inactive, and the time remaining before the disabling of the automatic application of the parking brake ends.

When the automatic application of the parking brake 30 is temporarily disabled according to the first mode, the driver can still manually apply the parking brake 30 if so desired. Advantageously, when the parking brake 30 is manually applied by the driver, this also ends the disabling of the automatic application of the parking brake 30.

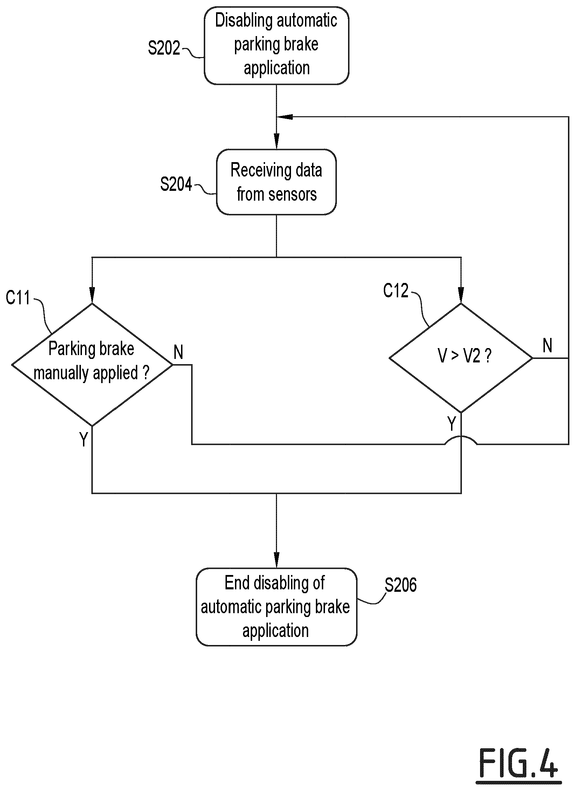

In some examples, the processing circuitry 52 temporarily disables the automatic application of the parking brake 30 according to a second mode during a disabling step S202, represented on figure 4. In other words, the automatic application of the parking brake 30 may be disabled according to the first mode previously described or according to the second mode.

The disabling step S202 is performed upon a second command of the driver. For example, the driver may perform a series of actions to temporarily disable the automatic application of the parking brake 30. The second command is distinct from the first command; for example the second command consists in, the parking brake 30 being released, manually releasing the parking brake 30. In some examples, the second command consists in, the parking brake 30 being released, pressing a start-stop button of the truck 10, while simultaneously manually releasing the parking brake 30. Having the parking brake 30 released while manually disabling the parking brake is an action that would not be typically performed by the driver and ensures that the second command is not performed by mistake, and in particular, prevents the driver from disabling the automatic application of the parking brake 30 according to the second mode when he or she wants to disable the automatic application of the parking brake 30 according to the first mode.

The processing circuitry 52 receives data from the door sensor 32 and the speed sensor 34, and in some examples, from the pedal pressure sensor 36 and/or from the seatbelt sensor 38 at a receiving step S204, via the input device interface 72 and the system bus 56.

The processing circuitry 52 then determines if one of the following conditions C11 or C12 is met, based on the data received from the door sensor 32 and the speed sensor 34, and in some examples, from the pedal pressure sensor 36 and/or from the seatbelt sensor 38.

The condition C11 is: the parking brake 30 is manually applied by the driver.

The condition C12 is: the speed V of the truck 10 is greater than a second speed threshold V2. The second speed threshold V2 is for example equal to 30 km/h.

If one of the conditions C11 or C12 is met, then the processing circuitry 52 ends the disabling of the automatic application of the parking brake 30 during a step S206.

If none of the conditions C11 and C12 are met, then the temporary disabling of the automatic parking brake 30 is maintained by the processing circuitry 52.

In some examples, which are not represented, the step S206 is performed by the processing circuitry 52 if the driver manually releases the parking brake 30 while the truck 10 is in an accessory mode. In the accessory mode, generally, the motor of the truck 10 is turned off, but some accessories of the truck 10, such as heating, air-conditioning, radio, powered by a battery in the truck 10, so they can be used by the driver.

The second mode to temporarily disable the automatic application of the parking brake 30 is used for example when performing repairs on the truck 10. In particular, condition C12 ensures that if the truck 10 is being driven on open road, and is therefore not being repaired, the automatic application of the parking brake 30 is enabled.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system 50 for temporarily disabling an automatic application of a parking brake 30 of a vehicle, the computer system 50 comprising processing circuitry 52 configured to:
- apply automatically the parking brake 30 of the vehicle 10;
- upon a command of a driver of the vehicle 10, temporarily disable the automatic application of the parking brake 30;
the processing circuit 52 being further configured to receive data from a door sensor 32 and a speed sensor 34, and to end the disabling of the automatic application of the parking brake 30 if the processing circuit 52 determines, based on the data from the door sensor 32 and the speed sensor 34, that one of the following conditions C1, C2, C3 is met:
- a door 16 of the vehicle 10 is closed;
- the vehicle 10 has a speed V greater than a first speed threshold V1, and a gear of the vehicle 10 is engaged; or
- a time period T greater than a predefined time period T1 has elapsed, the time period T1 starting when the processing circuitry 52 determines that the driver is inactive.

**Example 2:** The computer system 50 of example 1, wherein if during the time period T, the processing circuitry 52 determines that the driver is active, the time period T is reset and starts again when the processing circuitry 52 determines that the driver is inactive again.

**Example 3:** The computer system 50 of example 1, wherein the processing circuit 52 is further configured to end the disabling of the automatic application of the parking brake 30 if the door 16 of the vehicle 10 is closed and if the processing circuitry 52 determines that the driver is inactive.

**Example 4:** The computer system 50 of example 1, wherein the processing circuitry 52 is further configured to determine that the driver is inactive when a seatbelt 20 of a driver seat 18 is unfastened.

**Example 5:** The computer system 50 of example 1, wherein the processing circuitry 52 is configured to determine that the driver is inactive when no pressure is applied to pedals 26 of the vehicle 10, based on data received from a pedal pressure sensor 36.

**Example 6:** The computer system 50 of example 1, wherein the processing circuitry 52 is configured to determine that the driver is inactive when all the gears the vehicle 10 are disengaged.

**Example 7:** A vehicle 10 comprising the computer system 50 of example 1, and wherein the vehicle 10 further comprises:
- a parking brake 30, configured to be applied to prevent movement of the vehicle 10, and released, to allow the vehicle 10 to move;
- a door 16, configured to be open or closed to allow the driver to enter and exit the vehicle 10;
- a door sensor 32, configured to determine whether the door 16 is open or closed, and to send data representative of whether the door 16 is open or closed to the computer system 50; and
- a speed sensor 34, configured to measure a speed V of the vehicle 10 and to send the measured speed V to the computer system 50.

**Example 8:** A vehicle 10 according to example 7, further comprising at least one pedal pressure sensor 36, configured to measure whether or not pressure is applied to the pedals 26 to operate the pedals 26, and to send data representative of whether pressure is applied to the pedals 26 or not to the computer system 50.

**Example 9:** A vehicle 10 according to example 7, wherein the vehicle 10 is a truck, the truck comprises a cabin 12, the door 16 is a door of the cabin 12 and the pedals 26 are located in the cabin 12 in order for the driver to operate the truck 10.

**Example 10:** A method for temporarily disabling an automatic application of a parking brake 30 in a vehicle 10, the method being implemented by processing circuitry 52 of the vehicle 10, the method comprising the following steps:
- upon a command of a driver of the vehicle, temporarily disabling the automatic application of the parking brake S102;
- receiving data S104 from a door sensor 32 and a speed sensor 34;
- ending S106 the disabling of the automatic application of the parking brake 30, if the processing circuitry 52 determines, based on the data from the speed sensor 34 and the door sensor 32, that one of the following conditions C1, C2, C3 is met:
   ∘ a door 16 of the vehicle 10 is closed C1;
   ∘ the vehicle 10 has a speed V greater than a first speed threshold V1, and a gear of the vehicle 10 is engaged; or
   ∘ a time period T greater than a predefined time period T1 has elapsed, the time period T starting when the processing circuitry 52 determines that the driver is inactive.

**Example 11:** The method of example 10, wherein the command of the driver to temporarily disable the automatic application of the parking brake 30 consists in, while the parking brake 30 is applied, releasing the parking brake 30 by the driver.

**Example 12:** The method of example 11, wherein releasing the parking brake 30 by the driver consists in pushing a parking brake lever 24 in a releasing direction D1, while pressing on a pedal 26 of the vehicle 10.

**Example 13:** The method of example 10, wherein the command of the driver to temporarily disable the automatic application of the parking brake 30 consists in, while the parking brake 30 is applied, opening a door 16 of the vehicle 10 and releasing the parking brake 30 by the driver.

**Example 14:** The method of example 10, the command of the driver of the vehicle 10 is a first command, and temporary disabling of the automatic application of the parking brake 30 is done according to a first disabling mode, and the method comprises the following additional steps:
- upon a second command of the driver of the vehicle 10, temporarily disabling S202 the automatic application of the parking brake 30 according to a second disabling mode,
- in the second disabling mode, receiving data S204 from the speed sensor 34;
- ending the disabling of the automatic application of the parking brake 30, if one of the following conditions C11, C12 is met:
   o the parking brake 30 is applied by the driver; or
   o the vehicle 10 has a speed V greater than a second speed threshold V1.

**Example 15:** A computer program product comprising program code for performing, when executed by the processing circuitry 52, the method of example 10.

**Example 16:** A non-transitory computer-readable storage medium 64 comprising instructions, which when executed by the processing circuitry 52, cause the processing circuitry 52 to perform the method of one of examples 10 to 14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (50) for temporarily disabling an automatic application of a parking brake (30) of a vehicle (10), the computer system (50) comprising processing circuitry (52) configured to:
- apply automatically the parking brake (30) of the vehicle (10);
- upon a command of a driver of the vehicle (10), temporarily disable the automatic application of the parking brake (30);
the processing circuit (52) being further configured to receive data from a door sensor (32) and a speed sensor (34), and to end the disabling of the automatic application of the parking brake (30) if the processing circuit (52) determines, based on the data from the door sensor (32) and the speed sensor (34), that one of the following conditions (C1, C2, C3) is met:
- a door (16) of the vehicle (10) is closed;
- the vehicle (10) has a speed (V) greater than a first speed threshold (V1), and a gear of the vehicle (10) is engaged; or
- a time period (T) greater than a predefined time period (T1) has elapsed, the time period (T1) starting when the processing circuitry (52) determines that the driver is inactive.

2. The computer system (50) of claim 1, wherein if during the time period (T), the processing circuitry (52) determines that the driver is active, the time period (T) is reset and starts again when the processing circuitry (52) determines that the driver is inactive again.

3. The computer system (50) of claim 1 or 2, wherein the processing circuit (52) is further configured to end the disabling of the automatic application of the parking brake (30) if the door (16) of the vehicle (10) is closed and if the processing circuitry (52) determines that the driver is inactive.

4. The computer system (50) of any one of claims 1 to 3, wherein the processing circuitry is further (52) configured to determine that the driver is inactive when a seatbelt (20) of a driver seat (18) is unfastened.

5. The computer system (50) of any one of claims 1 to 4, wherein the processing circuitry (52) is configured to determine that the driver is inactive when no pressure is applied to pedals (26) of the vehicle (10), based on data received from a pedal pressure sensor (36).

6. The computer system (50) of any one of claims 1 to 5, wherein the processing circuitry (52) is configured to determine that the driver is inactive when all the gears the vehicle (10) are disengaged.

7. A vehicle (10) comprising the computer system (50) of any one of claims 1 to 6, and wherein the vehicle (10) further comprises:
- a parking brake (30), configured to be applied to prevent movement of the vehicle (10), and released, to allow the vehicle (10) to move;
- a door (16), configured to be open or closed to allow the driver to enter and exit the vehicle (10);
- a door sensor (32), configured to determine whether the door (16) is open or closed, and to send data representative of whether the door is open or closed to the computer system (50); and
- a speed sensor (34), configured to measure a speed (V) of the vehicle (10) and to send the measured speed (V) to the computer system (50).

8. A vehicle (10) according to claim 7, further comprising at least one pedal pressure sensor (36), configured to measure whether or not pressure is applied to the pedals (26) to operate the pedals (26), and to send data representative of whether pressure is applied to the pedals (26) or not to the computer system (50).

9. A method for temporarily disabling an automatic application of a parking brake (30) in a vehicle (10), the method being implemented by processing circuitry (52) of the vehicle (10), the method comprising the following steps:
- upon a command of a driver of the vehicle, temporarily disabling the automatic application of the parking brake (S102);
- receiving data (S104) from a door sensor (32) and a speed sensor (34);
- ending (S106) the disabling of the automatic application of the parking brake (30), if the processing circuitry (52) determines, based on the data from the speed sensor (34) and the door sensor (32), that one of the following conditions (C1, C2, C3) is met:
∘ a door (16) of the vehicle is closed (C1);
∘ the vehicle (10) has a speed (V) greater than a first speed threshold (V1), and a gear of the vehicle (10) is engaged; or
∘ a time period (T) greater than a predefined time period (T1) has elapsed, the time period (T) starting when the processing circuitry (52) determines that the driver is inactive.

10. The method of claim 9, wherein the command of the driver to temporarily disable the automatic application of the parking brake (30) consists in, while the parking brake (30) is applied, releasing the parking brake (30) by the driver.

11. The method of claim 10, wherein releasing the parking brake (30) by the driver consists in pushing a parking brake lever (24) in a releasing direction (D1), while pressing on a pedal (26) of the vehicle (10).

12. The method of claim 9, wherein the command of the driver to temporarily disable the automatic application of the parking brake (30) consists in, while the parking brake (30) is applied, opening a door (16) of the vehicle and releasing the parking brake (30) by the driver.

13. The method of claim 9, wherein the command of the driver of the vehicle (10) is a first command, and temporary disabling of the automatic application of the parking brake (30) is done according to a first disabling mode, and the method comprises the following additional steps:
- upon a second command of the driver of the vehicle (10), temporarily disabling (S202) the automatic application of the parking brake (30) according to a second disabling mode,
- in the second disabling mode, receiving data (S204) from the speed sensor (34);
- ending the disabling of the automatic application of the parking brake (30), if one of the following conditions (C11, C12) is met:
∘ the parking brake (30) is applied by the driver; or
∘ the vehicle (10) has a speed (V) greater than a second speed threshold (V1).

14. A computer program product comprising program code for performing, when executed by the processing circuitry (52), the method of claim 9.

15. A non-transitory computer-readable storage medium (64) comprising instructions, which when executed by the processing circuitry (52), cause the processing circuitry (52) to perform the method of any one of claims 9 to 13.
